# EUROPEAN PATENT APPLICATION

(11) **EP 4 787 100 A1**
(43) Date of publication of application: **05.08.2026**
(21) Application number: 26155338.2
(22) Date of filing: 30.01.2026
(51) Int. Cl.: G05B 23/02

(54) **AIRCRAFT MAINTENANCE SYSTEM**

(30) Priority: 03.02.2025 GB 202501550
(71) Applicant: Airbus Operations Limited, Bristol BS34 7PA (GB)
(72) Inventor: BILL, Andrew, Bristol, BS34 7PA (GB)
(74) Representative: EIP

(57) **Abstract**

An aircraft maintenance system controller, and corresponding method and storage medium are provided. The aircraft maintenance system controller is configured to obtain first da data representing operational characteristics of a plurality of components in an aircraft system. The first data is processed with a model of the aircraft system using a machine learning classifier to identify a plurality of altered operational characteristics of components in the aircraft system. A cause of the plurality of altered operational characteristics is then determined and used to generate second data indicative of the determined cause of the altered operational characteristics. Third data indicative of a validation of the determined cause of the plurality of altered operational characteristics are obtained and used to update the machine learning classifier based on the third data.

## Description

### TECHNICAL FIELD

The present invention relates to aircraft maintenance systems.

### BACKGROUND

Aircraft typically comprise many sensors to monitor the state of associated aircraft components. Aircraft may be provided with built in test equipment (BITE) that is configured monitor the states of associated aircraft components, detect altered operational states of components in the aircraft, and identify and/or isolate the causes of the altered operational states of components in the aircraft. The BITE may further generate appropriate alerts and/or records for attention of the crew of the aircraft and/or maintenance personnel.

### SUMMARY

A first aspect of the present invention provides an aircraft maintenance system controller configured to: obtain first data representing operational characteristics of a plurality of components in an aircraft system; process the first data with a model of the aircraft system using a machine learning classifier to: identify a plurality of altered operational characteristics of components in the aircraft system; and determine a cause of the plurality of altered operational characteristics; generate second data indicative of the determined cause of the altered operational characteristics; obtain third data indicative of a validation of the determined cause of the plurality of altered operational characteristics; and update the machine learning classifier based on the third data.

By using a machine learning classifier to evaluate the first data using the model of the aircraft system, it becomes possible for the aircraft maintenance system to identify the breadth of altered operational characteristics of components in the aircraft and their causes based on learned correlations and patterns in the behaviour of aircraft system. This relieves the burden in developing an aircraft maintenance system that would otherwise require explicit programming of large number of fault codes, indicating specific faults and their associated combinations of altered operational characteristics that are indicative of a given fault.

Validating the cause determined by the machine learning classifier, and updating the machine learning classifier, enables the machine learning classifier to learn to identify and determine causes of altered operational characteristics based on the actual behaviour of the aircraft system. In this way, the aircraft maintenance system is able to identify causes of altered operational characteristics that would otherwise be difficult to diagnose or require a relatively larger number of maintenance procedures to be performed. Operational characteristics of components may include the state and/or condition of one or more aspects of the given component. For example, the operational characteristics may include a mode of operation and/or a condition of one or more elements in the component. The first data may include or be derived from messages or signals sent from one or more aircraft components and/or data accumulators. For example, some aircraft components may be configured to provide status messages to the interface, representing the status of one or more monitored characteristics of the component. These status messages may alternatively, or additionally, be provided to data accumulators that are configured to accumulate messages from a plurality of components. In further examples, the first data may be derived based on the performance of the aircraft components, as determined from messages and/or signals sent from those aircraft components.

Optionally, the aircraft maintenance system controller is configured to generate fault code data comprising a plurality of fault codes, each fault code being associated with a respective plurality of altered operational characteristics of components in the aircraft system by: obtaining scenario data representing operational characteristics of the plurality of aircraft components in the aircraft system during a plurality of operational scenarios; processing the scenario data with the model of the aircraft system using the machine learning classifier to, for each of the plurality of scenarios: identify a respective plurality of altered operational characteristics of components in the aircraft system; and determine a respective cause of the plurality of altered operational characteristics; and generating fault code data for each scenario of the plurality of scenarios, the fault code data for each scenario comprising a respective fault code and an association with the respective plurality of altered operational characteristics.

Optionally, the aircraft maintenance system controller is configured to generate instructions for a further aircraft maintenance system controller configured to obtain operational data representing operational characteristics of components in the aircraft system, the instructions causing the further aircraft maintenance system controller to: process the operational data to identify a plurality of altered operational characteristics of components in the aircraft system; and generate a maintenance message comprising a fault code from the plurality of fault codes, the fault code being associated with the plurality of altered operational characteristics identified from the operational data.

Optionally, the second data comprises a maintenance message indicative of a maintenance procedure to be performed based on the determined cause of the altered operational characteristics.

Optionally, the model comprises a graph model comprising a set of nodes connected by a corresponding set of edges, and wherein each node in the graph model represents a function of a component in the aircraft.

Optionally, the first data comprises a plurality of portions, each portion comprising a set of operational characteristics for a respective component in the aircraft, and wherein each node of the graph model is associated with a corresponding set of operational characteristics for a respective component.

Optionally, the set of operational characteristics for a given component are derived from sensed data.

Optionally, the sensed data from which a said operational characteristic is derived comprises any one or more of: voltage, frequency, electrical current, electrical resistance, pressure, light, humidity; and temperature.

Optionally, the operational characteristics of a said component comprise any one or more of: an indication of a condition of an electrical circuit; an indication of a condition of a value; an indication of a power status; and an indication of an operating mode of the said component.

Optionally, each portion of the first data comprises time series data representing the set of operational characteristics during a period of operation of the aircraft.

Processing time series data enables the machine learning classifier to identify altered operational characteristics which are intermittent and/or determine causes of altered operational characteristics that are intermittent, exhibit temporal variation, or arise from temporally changing dependencies between interconnected components.

Optionally, the identified plurality of altered operational characteristics comprise: first altered operational characteristic during a first period of operation of the aircraft and associated with a first component; and a second altered operational characteristic during a second period of operation of the aircraft and associated with a second, different, component.

By identifying altered operational characteristics that occur at different times and in different components, the aircraft maintenance system is able to evaluate temporal, as well as instantaneous, dependencies between components that lead to a plurality of altered operational characteristics arising from a single cause or component.

Optionally, the first period and the second period are different.

Optionally, the first period and the second period overlap.

Optionally, the determined cause of the first altered operational characteristic and the second altered operational characteristic is one of the first component or the second component.

In this way the aircraft maintenance system is able to isolate the cause of a plurality of altered operational characteristics across a number components that are dependent on a single component, or dependent on a subset of the component exhibiting altered operational characteristics.

Optionally, the identified plurality of altered operational characteristics comprise a first altered operational characteristic associated with a first component and a second altered operational characteristic associated with a second, different, component and wherein the determined cause of the first altered operational characteristic and the second altered operational characteristic is one of the first component or the second component.

Optionally, the maintenance message comprises an indication of a maintenance procedure configured to address the determined cause, and wherein the computer-executable instructions, when executed by the processor, cause the aircraft maintenance system to transmit the second data to a scheduling system to schedule the aircraft system for the maintenance procedure.

In this way, the aircraft maintenance system is able to automatically schedule the maintenance of the aircraft system reducing aircraft downtime during which the maintenance procedure is to be performed.

Optionally, the computer-executable instructions, when executed by the processor, cause the aircraft maintenance system to: obtain fourth data representing operational characteristics of components in the aircraft system during a further period of operation of the aircraft system; process the fourth data with the model using the classifier to: predict one or more altered operational characteristics of components in the aircraft system; and predict a cause of the one or more predicted altered operational characteristics; and generate fifth data comprising an indication of the predicted cause.

Performing predictive maintenance evaluation in this way enables preventative maintenance to be performed on the aircraft system, thereby reducing the future downtime for the aircraft. Predictive maintenance of the aircraft system may prevent faults from developing and causing further faults, leading to reduced service time, maintenance costs, and extending the service life of components in the aircraft system.

Optionally, the first data comprises control inputs.

Control inputs may represent the control of the aircraft system and affect which operational characteristics would be considered to be altered. Some operational characteristics may be considered to be normal, or expected, in some scenarios and may be considered to exhibit altered behaviour of components in other scenarios. Processing control inputs along with the operational characteristics of the components enables the aircraft maintenance system to develop a detailed understanding of the system behaviour and more accurately identify altered operational characteristics.

Optionally, the second data comprises control outputs for modifying control of the aircraft system in response to the determined cause of the plurality of altered operational characteristics.

In this way, the aircraft maintenance system may be used to mitigate the degradation of the condition of aircraft components. Additionally, modifying the control of the aircraft system using the control outputs may enable the aircraft maintenance system to isolate and/or validate the determined cause of the plurality of altered operational characteristics.

Optionally, the computer-executable instructions, when executed by the processor, cause the aircraft maintenance system to: transmit the second data to an aircraft control system configured to control the aircraft system; obtain sixth data representing operational characteristics of components in the aircraft system after control of the aircraft system has been modified according to the control outputs; and process the sixth data with the model using the classifier to generate the third data.

By evaluating the operational characteristics of the components in the aircraft system after applying the control outputs, it is possible for the aircraft maintenance system to validate the determined cause and fine tune the performance of the machine learning classifier.

According to a second aspect there is provided an aircraft comprising an avionics network; an aircraft system comprising a plurality of components; and the aircraft maintenance system described above with respect to the first aspect. The first data is obtained from the plurality of components via the avionics network.

According to a third aspect there is provided a test system comprising: the aircraft maintenance system according to the first aspect; and at least part of a test aircraft system communicatively coupled to the aircraft maintenance system and comprising a plurality of components configured generate the first data, and wherein the aircraft maintenance system obtains the first data from the at least part of a test aircraft system.

According to a fourth aspect there is provided a method for an aircraft maintenance system controller comprising: obtaining first data representing operational characteristics of a plurality of components in the aircraft system; processing the first data with a model of the aircraft system using a machine learning classifier to: identify a plurality of altered operational characteristics of components in the aircraft system; and determine a cause of the plurality of altered operational characteristics; generating second data indicative of the determine cause of the altered operational characteristics; obtaining third data indicative of a validation of the determined cause of the plurality of altered operational characteristics; and updating the machine learning classifier based on the third data.

Optionally the method comprises generating fault code data comprising a plurality of fault codes, each fault code being associated with at least one of a respective plurality of altered operational characteristics of components in the aircraft system by: obtaining scenario data representing operational characteristics of the plurality of aircraft components in the aircraft system during a plurality of operational scenarios; processing the scenario data with the model of the aircraft system using the machine learning classifier to, for each of the plurality of scenarios: identify a respective plurality of altered operational characteristics of components in the aircraft system; and determine a respective cause of the plurality of altered operational characteristics; and generating fault code data for each scenario of the plurality of scenarios, the fault code data for each scenario comprising a respective fault code and an association with the respective plurality of altered operational characteristics.

Optionally, the second data comprises a maintenance message comprising an indication of a maintenance procedure configured to address the determined cause of the plurality of altered operational characteristics, and the method comprises: performing the maintenance procedure; subsequently obtaining fourth data representing operational characteristics of the plurality of components in the aircraft system; and generating the third data, based on the fourth data, by processing the fourth data with the model using the machine learning classifier.

Optionally, the second data comprises control outputs for modifying control of the aircraft system in response to the determined cause of the plurality of altered operational characteristics, and the method comprises: controlling the aircraft system using the control outputs; subsequently obtaining fifth data representing operational characteristics of the plurality of components in the aircraft system; and generating the third data, based on the fifth data, by processing the fifth data with the model using the machine learning classifier.

According to a fifth aspect there is provided a non-transitory computer-readable storage medium comprising computer-executable instructions which, when executed by a processor, cause the processor to: obtain first data representing operational characteristics of a plurality of components in an aircraft system; process the first data with a model representing the aircraft system using a machine learning classifier to: identify a plurality of altered operational characteristics of components in the aircraft system; and determine a cause of the plurality of altered operational characteristics; generate second data indicative of the determined cause of the altered operational characteristics; obtain third data indicative of a validation of the determined cause of the plurality of altered operational characteristics; and update the machine learning classifier based on the third data.

Further features and advantages of the invention will become apparent from the following description of preferred embodiments of the invention, given by way of example only, which is made with reference to the accompanying drawings.

### BRIEF DESCRIPTION OF THE DRAWINGS

Embodiments of the invention will now be described, by way of example only, with reference to the accompanying drawings, in which:
Figure 1 shows a schematic diagram of an aircraft maintenance system according to examples.
Figure 2 shows a schematic diagram of a process performed by the aircraft maintenance system according to examples.
Figure 3 shows a schematic diagram of a process performed by the aircraft maintenance system according to examples in which the aircraft maintenance system processes time system data.
Figure 4 shows a schematic diagram of a process of configuring a further aircraft maintenance system controller according to examples.
Figure 5 shows a schematic diagram of a predictive maintenance process performed by the aircraft maintenance system according to examples.
Figure 6 shows a schematic diagram of a model of an aircraft system according to examples in which the model comprises a graph model.
Figure 7 shows a schematic diagram of an aircraft according to examples.
Figure 8 shows a schematic diagram of a test system according to examples.
Figure 9 shows a schematic diagram of a method for an aircraft maintenance system controller according to examples.
Figure 10 shows a schematic diagram of a non-transitory computer-readable storage medium according to examples.

### DETAILED DESCRIPTION

Built-In Test Equipment (BITE) systems in aircraft are embedded diagnostic tools designed to monitor, test, and ensure the functionality of various onboard systems and components. To provide a BITE system for a given aircraft system, detailed and specific knowledge of both internal, external, and interconnected systems is used. BITE systems typically include applications, or software, that are configured to process messages from various components and sensors to detect altered operational characteristics of components in the aircraft system and to diagnose the causes of these altered operational characteristics.

BITE systems typically generate messages for aircraft maintenance crew that identify the components having an altered operational characteristic, a likely cause, and troubleshooting procedure codes that allow the maintenance crew to step through a set of specific maintenance procedures until the failure is corrected. A single fault may result in a plurality of components having altered operational characteristics. In these cases, a BITE system may generate multiple messages accusing various components in the aircraft system. This presents a problem for maintenance crews and typically extends the time for which an aircraft is grounded while diagnosis and maintenance is performed.

Fault isolation can reduce the number of messages generated by a BITE system by identifying a reduced number of potential causes of the altered operational characteristics of aircraft components. Designing fault isolation in BITE systems is challenging due to the complexity of modern aircraft systems. Modern aircraft have highly integrated systems in which multiple systems may share components, like wiring or processors, making it difficult to isolate faults to a single component. Different faults in aircraft components can produce similar symptoms. For example, a failure in a sensor and a failure in a processor reading that sensor may both appear as a failure to obtain sensor data.

BITE systems are typically deterministic, or programmatic, systems. Designers assign fault codes to specific causes of faults in an aircraft system and configure the BITE system with rules to select specific fault codes in response to certain combinations of signals or messages received from components in the aircraft system. This relies on specific and detailed knowledge of the aircraft system. For example, a BITE system designer may have to define the combinations of messages or signals that are associated with each fault code manually and/or fault isolation procedures to be performed after detecting a given altered operational characteristic. This often delays the development of new aircraft and aircraft systems.

Updating or modifying BITE systems typically requires manual re-programming which is resource intensive and time consuming for developers. Additionally, deterministic BITE systems are difficult to scale as the rules grow exponentially as the monitored system increases, leading to bloated codebases and reduced maintainability. This presents a particular problem for highly interconnected systems such as aircraft.

Certain examples described herein provide an aircraft maintenance system controller that is capable of determining the cause of a plurality of altered operational characteristics in an aircraft system. The systems and methods described herein aim to reduce the number of maintenance messages that are generated by performing fault isolation using a machine learning classifier. The use of a machine learning classifier enables the aircraft maintenance system controller to learn the behaviour of the aircraft system and generate fault codes that can be used to configure a deterministic BITE system for an aircraft. This results in a lower development overhead, and enables the aircraft maintenance system controller to determine a cause of altered operational characteristics that are outside of those which may be programmed or identified by developers of deterministic BITE systems. This in turn reduces the downtime for an aircraft when performing maintenance by reducing the number of potential causes for which associated maintenance procedures are performed.

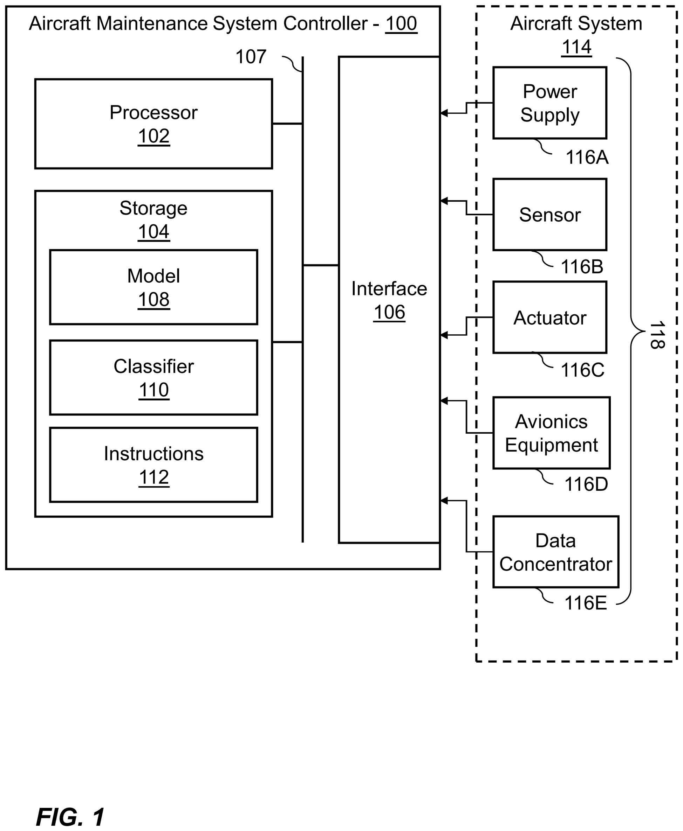

An aircraft maintenance system controller 100 in accordance with the present invention is illustrated schematically in Figure 1. The aircraft maintenance system controller 100 has a processor 102, storage 104, and an interface 106. The processor 102, storage 104, and the interface 106 are communicatively coupled over a bus 107.

The processor 102 includes a suitable combination of processing circuitry including any of: general purpose processing units (CPUs), graphics processing units (GPUs), application specific integrated circuit (ASICs), fixed programmable gate arrays (FGPAs) or any other suitable processing circuitry. In aircraft maintenance system controllers 100 a variety of processing circuitry types may be employed to support different functions. For example, where low-latency, and often lower-complexity, processing is required FPGAs or ASICs may be more suitable than for tasks requiring more complex processing, for which CPUs or GPUs may be more suitable.

The storage 104 includes a suitable combination of volatile and/or non-volatile storage. Volatile storage may be used to mount data that is to be readily accessed for performing one or more functions and non-volatile storage, such as Read-Only Memory (ROM), is used for longer term persistent storage of data. The storage 104 stores a model 108 of an aircraft system 114, a machine learning classifier 110, and computer-executable instructions 112 to be executed by the processor 102.

The interface 106 includes any suitable combination of hardware and software to enable the aircraft maintenance system controller 100 to obtain data representing operational characteristics of components 118 in an aircraft system 114. In some examples, the interface 106 may communicate with components 118 in an aircraft system 114 to obtain such data..

The model 108 replicates the behaviour and function of the aircraft system 114 under various conditions. For example, the model 108 may be configured to replicate the architecture, physical dynamics, and data flow within the aircraft system 114. The model 106 may comprise an input interface for obtaining operating inputs or conditions for the aircraft system, and an output interface to provide an indication of the behaviour or function of the aircraft system 114 in response to the operating inputs.

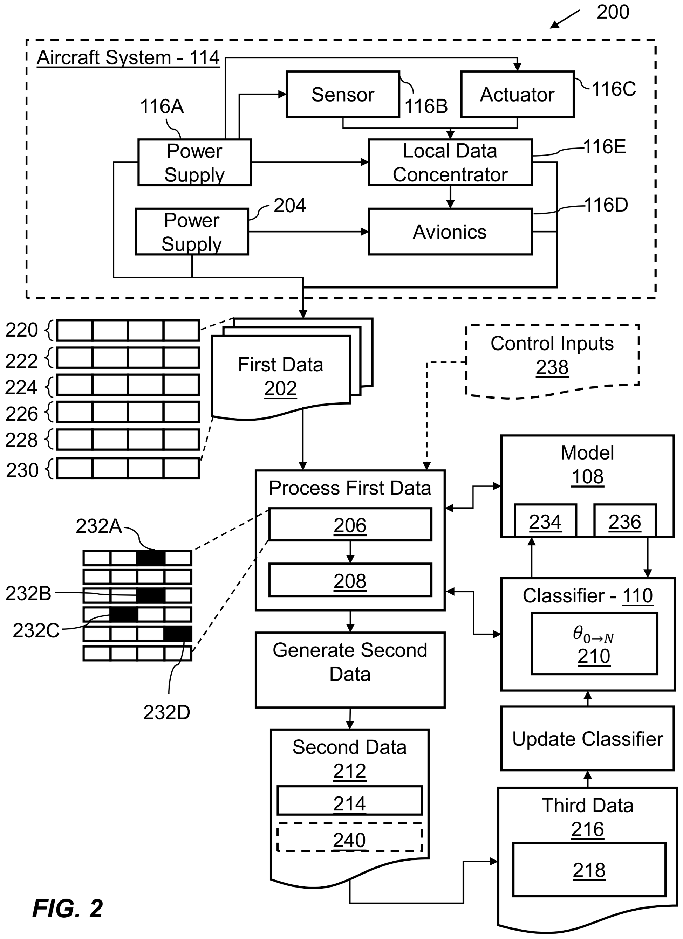

The aircraft maintenance system controller 100 implements a process 200, shown schematically in Figure 2, according to the instructions 112 when executed by the processor 102. The process 200 comprises obtaining first data 202 using the interface 106. The first data 202 represents operational characteristics of a plurality of components 118 in the aircraft system 114. In the present example, the plurality of components 118 in the aircraft system 114 include a first power supply 116A for powering one or more components in the aircraft system 114, a sensor 116B for obtaining sensor data used to control one or more functions in the aircraft system 114, an actuator 116C, avionics equipment 116D for controlling components in the aircraft system 114, a local data concentrator 116E configured to collate signals, responses and controls for connected components, and a second power supply 204.

The aircraft maintenance system controller 100 uses the machine learning classifier 110 to process the first data 202 with the model 108 to identify 206 a plurality of altered operational characteristics of components in the aircraft system 114 and determine 208 a cause of the plurality of altered operational characteristics. The machine learning classifier 110 comprises a plurality of parameters 210 which, in combination with other aspects of the machine learning classifier 110 such as the classifier architecture, define a learned policy for the classifier 110 when processing the first data 202 with the model 108.

In an example, the machine learning classifier 110 comprises a neural network such as Recurrent Neural Network (RNN), a Transformer, a Graph Neural Network (GNN), Convolutional Neural Network (CNN), or any other suitable neural network architecture. It is to be appreciated that the machine learning classifier 110 may comprise other types of machine learning classifiers, such Bayesian Networks, Decision-Tree Based classifiers, Support Vector Machines (SVMs) or other suitable categories of machine learning classifier.

In the present example, the altered operational characteristics may include a failure to obtain sensed data from the sensor 116B at a local data concentrator 116E, a loss of power for one or more circuits in the sensor 116B, a low voltage in the power supply 116A, and the actuator 116C not performing a specified actuation. In this case, there are several possible causes of these altered operational characteristics. For example, the altered operational characteristics may each be caused by independent faults in the power supply 116A, the sensor 116B, the actuator 116C, and the data concentrator 116E. Alternatively, a fault in one or more of the power supply 116A, the sensor 116B, and the actuator 116C, may cause the altered operational characteristics of the remaining components.

Where the altered operational characteristics of a plurality of components 116A to 116C are caused by a subset of those components, generating fault codes or maintenance messages for all of the components 116A to 116C having an altered operational characteristic may lead to high loads on a databus or avionics network in the aircraft. Additionally, this can lead to extended times for which the aircraft is grounded as maintenance crews will have to perform a large number of maintenance procedures to isolate and correct the cause of the altered operational characteristics.

Determining a cause of the plurality of altered operational characteristics reduces the number of maintenance messages and fault codes which are generated, relieving the load on the aircraft databus and reducing the time for which an aircraft is grounded.

The aircraft maintenance system controller 100 generates second data 212 indicative of the determined cause of the altered operational characteristics. In an example, the second data 212 comprises a fault code that is associated with the specific plurality of altered operational characteristics of the components 118 in the aircraft system 114 and the determined cause. Fault codes, generated by the aircraft maintenance system controller 100 in this way, can be used to configure a BITE system for an aircraft to monitor components in the aircraft system 114 and generate fault codes.

These fault codes enable maintenance systems or service crew to efficiently identify which maintenance procedures should be performed to address the plurality of altered operational characteristics. For example, unique combinations of altered operational characteristics may be assigned respective fault codes that are associated with one or more maintenance procedures that should be performed to service the aircraft system 114.

Associations between fault codes and respective maintenance procedures that should be performed may be stored in a database or lookup table. The fault codes can be used to query the database to identify the associated maintenance procedures and generate a corresponding maintenance message. A BITE system for an aircraft that is configured to generate the fault codes determined by the aircraft maintenance system controller 100 may use the database in operation to generate maintenance messages.

This database may additionally, or alternatively, store associations between the fault codes, the respective pluralities of altered operational characteristics and/or the determined causes of these altered operational characteristics. In this way, maintenance systems or service crew are able to use a fault code generated by the aircraft maintenance system controller 100 to identify relevant maintenance procedures, the associated altered operational characteristics, and/or a determined cause of the altered operational characteristics.

In some examples, the second data 212 generated by the aircraft maintenance system controller 100 is used to build the database. To this end, the second data 212 may additionally include an indication of the plurality of altered operational characteristics which correspond to the determined cause. In this way, the output of the aircraft maintenance system controller 100 can be analysed and checked to obtain insights into the behaviour of the aircraft system 114 which may be used to generate the database.

The aircraft maintenance system controller 100 obtains third data 216 indicative of a validation of the determined cause 218 of the plurality of altered operational characteristics and updates the machine learning classifier 110 based on the third data 216. The manner in which the third data 216 is obtained depends on the manner in which the aircraft maintenance system controller 100 is deployed.

In one example, the third data 216 may be obtained from one or more external sources, such as remote computers connected to the aircraft maintenance system controller 100 over a network via the interface 106. For example, developers may validate or verify the determined cause and provide the third data to the aircraft maintenance system controller 100.

Updating the machine learning classifier 110 may comprise modifying or updating the parameters 210 representing the policy of the machine learning classifier 110. For example, where the third data 216 is indicative of the cause of the altered operational characteristics determined by the machine learning classifier 110 being correct, the policy of the machine learning classifier 110 is reinforced. Where the cause of the altered operational characteristics determined by the machine learning classifier 110 is incorrect, the parameters 210 representing the policy of the machine learning classifier 110 is modified such that the machine learning classifier 110 is able to more accurately identify the correct cause in the future.

Validating and updating the machine learning classifier 110 in this way enables the aircraft maintenance system controller 100 to adapt to the actual behaviour of the aircraft system 114. This allows the machine learning classifier 110 to learn correlations between operational characteristics of components 116A to 116E and 204 and associated causes that may otherwise be undetected by deterministic maintenance systems for which fault codes are generated manually by the developers of the aircraft system 114.

In the present example, the first data 202 comprises a plurality of portions 220 to 230, each portion 220 comprising a set of operational characteristics for a respective component in the aircraft system 114. The set of operational characteristics for a respective component may include any one or more of an indication of a condition of an electrical circuit associated with the component, an indication of a condition of a valve associated with the component, an indication of a power status for the component, and an indication of an operating mode of the component.

A first portion 220 of the first data 202, shown in Figure 2, represents a set of operational characteristics of the sensor 116B in the aircraft system 114. The specific operational characteristics that are provided for a given component will depend on the type of component. In the case of the sensor 116B, the set of operational characteristics may include a condition of one or more electrical circuits in the sensor 116B, a connection status between the sensor 116B and one or more connected components, and an operating mode of the sensor 116B.

A second portion 222 of the first data 202 represents a set of operational characteristics of the actuator 116C comprising an actuation state or condition of an associated valve, a power status, and other relevant operational characteristics.

A third portion 224 of the first data 202 represents a set of operational characteristics of the local data concentrator 116E. The set of operational characteristics in the third portion 224 may include a communication status with one or more connected components, a condition of electrical circuit components in the data concentrator 116E and other relevant operational characteristics.

A fourth portion 226 of the first data 202 represents a set of operational characteristics of a power supply 116A configured to power the sensor 116B, the actuator 116C, and the local data concentrator 116E. The set of operational characteristics in the fourth portion 226 may comprise a condition of one or more electrical circuits in the power supply 116A and indications of power related parameters for the power supply 116A such as voltage, current, and temperature.

The fifth portion 228 of the first data 202 represents a set of operational characteristics of avionics equipment 116D in the aircraft system 114, such as communication states with connected components, the status and/or modes of operations performed by the avionics equipment 116D, and/or other relevant characteristics for the avionics equipment 116D.

The sixth portion 230 of the first data 202 represents a set of operational characteristics of a second power supply 204 in the aircraft system 114, which may be similar to the operational characteristics in the fourth portion 224.

One or more of the set of operational characteristics for a component 116B in the aircraft system 114 may be derived from sensed data. For example, the sensor 116B may comprise or be connected to one or more monitoring devices that are configured to monitor the operation of the sensor 116B to determine the operational characteristics. To determine the condition of electrical circuits in the sensor 116B, the voltage, frequency, electrical current, electrical resistance, and/or temperature of the electrical circuits in the sensor 116B may be monitored to derive the operational characteristics corresponding to the sensor 116B.

The sensed data used to derive the operational characteristics of a given component 116A to 116E in the aircraft system 114 will depend on the component type and the associated operational characteristics. Additional examples of sensed data from which operational characteristics of a component may be derived include pressure, light intensity, and humidity.

The machine learning classifier 110 is used to evaluate the behaviour of the model 108 based on the first data 202 to identify the plurality of altered operational characteristics 232A to 232D. The identified altered operational characteristics 232A to 232D are shown in Figure 2 using solid black boxes. In this example, the identified altered operational characteristics 232A to 232D comprise a lack of power in a circuit of the sensor 116B, a failure to obtain data from the sensor 116B at the data concentrator 116E, an altered connection status between the sensor 116B and the power supply 116A, an altered operating mode for the avionics equipment 116D.

The machine learning classifier 110 may apply the first data 202 to the model 108 using the input interface 234 to verify the operational characteristics of the components 116A to 116E in the aircraft system 114. The model 108 processes the first data 202 and responds to the classifier 110 using the output interface 236, for example, by specifying the behaviour of the aircraft system 114 according to the first data 202.

In this case, the machine learning classifier 110 is trained to recognize the expected behaviour, dependency, and operational characteristics of the components 116A to 116E under certain circumstances. For example, the machine learning classifier 110 is trained to use the model 108 to predict the operational characteristics of the local data concentrator 116E under a plurality of scenarios. In a first scenario in which the components connected to the avionics equipment 116D are operating normally, the classifier 110 may predict the expected operating characteristics of the avionics equipment 116D. In a second scenario, the machine learning classifier 110 may be configured to predict the expected operating characteristics of the avionics equipment 116D where one or more of the operating characteristics of the sensor 116B are altered. In further scenarios, the machine learning classifier 110 may be configured to predict the operating characteristics of the avionics equipment 116D where operating characteristics of the power supply 116A, sensor 116B, and actuator 116C are altered.

By training the machine learning classifier 110 to predict the operating characteristics of each of the components 116A to 116E in a variety of scenarios the classifier 110 is able to identify patterns and correlations between operating characteristics of each of the components 116A to 116E in the aircraft system 114.

It is to be appreciated that the operating characteristics of a given component may vary during operation of the aircraft system 114. A given operational characteristic of a component may represent a normal operation of the component in some circumstances, and an altered operation in other circumstances. The machine learning classifier 110 is capable of identifying when an operational characteristic of a given component is altered as compared to the expected behaviour of the aircraft system 114.

Based on the identified plurality of altered operational characteristics 232A to 232D, the machine learning classifier 110 uses to the model 108 to determine a cause of the plurality of altered operational characteristics 232A to 232D. In the example set out above, the determined cause of the altered operational characteristics of the sensor 116B, power supply 116A, the avionics equipment 116D, and local data concentrator 116E may be determined to be fault in a circuit of the power supply 116A causing a failure to provide power to one or more circuits in the sensor 116B. This in turn causes the local data concentrator 116E to fail to obtain sensor data from the sensor 116B, which causes the avionics equipment 116D to operate under an altered operating mode.

By determining a single cause of a plurality of altered operational characteristics 232A to 232D across a plurality of components 118, the aircraft maintenance system controller 100 is capable of providing a reduced number of fault codes and maintenance messages, thereby shortening the downtime for the aircraft to undergo maintenance. Additionally, this reduces the load on the databus for the aircraft system 114 to generate and transmit maintenance messages for the aircraft.

In an example, the aircraft maintenance system controller 100 also obtains control inputs 238 representing control signals for the components 118 in the aircraft system 114. The control inputs 238 may include inputs from one or more operators of the aircraft system 114 and/or lower-level control inputs between components in the aircraft system 114 that are not directly controllable by an operator.

The control inputs 238 may be processed along with the first data 202 and the model 108 using the classifier 110. For example, the control inputs 238 may be used to modify the model 108 of the aircraft system 114 to represent the control of the aircraft system 114. The control inputs 238 may specify an instruction for actuation of the actuator 116C. In this case, the instruction to actuate the actuator 116C may modify the expected operating characteristics of the actuator 116C and connected components 116A to 116E in the aircraft system 114.

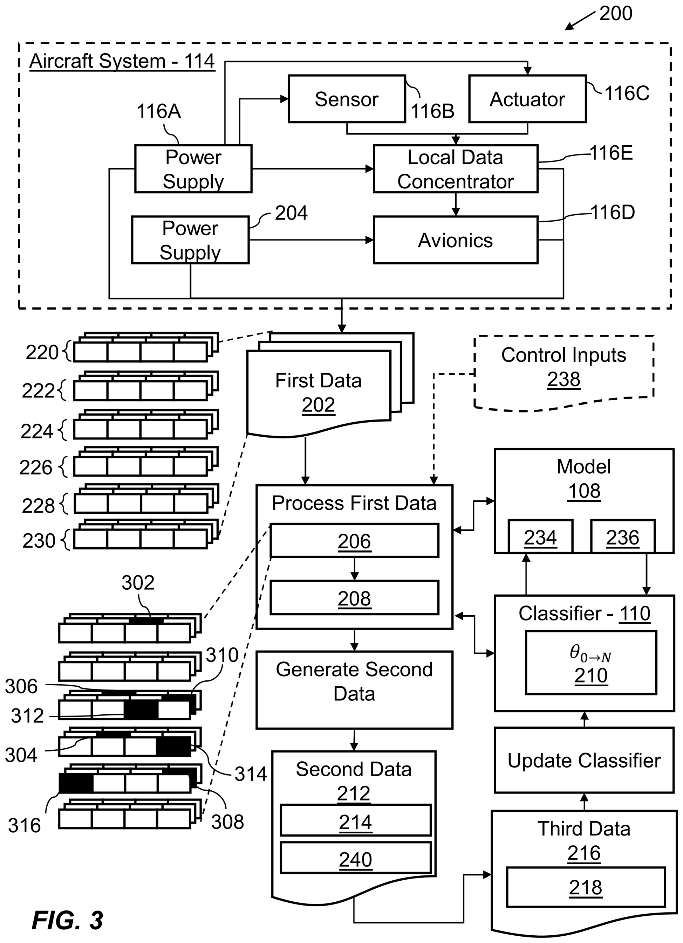

The operational characteristics of components 114 may vary during operation of the aircraft system 114. Figure 3 shows an example in which the first data 202 comprises time series data. In this case, each portion 220 to 230 of the first data 202 comprises time series data representing a corresponding set of operational characteristics during a period of operation of the aircraft. For example, the set of operational characteristics for the sensor 116B may comprise a condition of one or more electrical circuits in the sensor 116B at a plurality of times during the period of operation.

Time series data is capable of representing the changing operational characteristics of components 118 in the aircraft system 114 during a period of operation of the aircraft system 114. It is to be appreciated that frequency with which operational characteristics are measured, or recorded, during the period may vary between types of operational characteristics and/or components. For example, during the period of operation of the aircraft system 114, the condition of electrical circuits in the sensor 116B may be recorded more frequently in the first portion 220 of the first data 202 than an operating mode of the sensor 116B. Additionally, or alternatively, the operational characteristics of the data concentrator 116E may be recorded less frequently than the operational characteristics of the sensor 116B in the first data 202.

Where the first data 202 comprises time series data, the aircraft maintenance system controller 100 may identify altered operational characteristics occurring at different times. For example, an altered operational characteristic 302 of a first component 116B during a first period and an altered operational characteristic 304 of a second component 116A during a second period may be identified, wherein the first period and the second period occur during the period of operation of the aircraft system 114.

By processing time series data using the machine learning classifier 110 to identify a plurality of altered operational characteristics 302 to 316 and determine an associated cause, the aircraft maintenance system controller 100 is able to determine intermittent and/or time varying causes that arise due to dependencies between operational characteristics of components 116A to 116E in the aircraft system 114.

In an example, the first period and the second period are different. For example, the first period and the second period may be mutually exclusive or partially overlap. In this way, the aircraft maintenance system controller 100 is able to determine a cause of a plurality of altered operational characteristics 302 to 316 in which there are temporal dependencies between the operational characteristics of different components.

In an example, the power supply 116A may fail to provide power to the sensor 116B during the first period. During the first period, the sensor 116B may not be expected to provide sensor data to the data accumulator 116E and so the sensor 116B may not exhibit an altered operational characteristic during the first period. During the second, subsequent, period the power supply 116A may successfully provide power to the sensor 116B. However, the loss of power during the first period may have caused the sensor 116B to perform a reset or otherwise prevent the sensor 116B from operating normally during the second period. As such, first data 202 collected during the second period may indicate that the power supply 116A is operating normally, but that the sensor 116B is exhibiting altered operational characteristics 302. If the first data 202 collected during the second period is processed alone, it may be determined that the sensor 116B has independently developed a fault. By processing first data 202 corresponding to the first period and the second period, the aircraft maintenance system controller 100 is able to identify the failure to power the sensor 116B during the first period as the cause of the altered operational characteristics 302 of the sensor 116B during the second period.

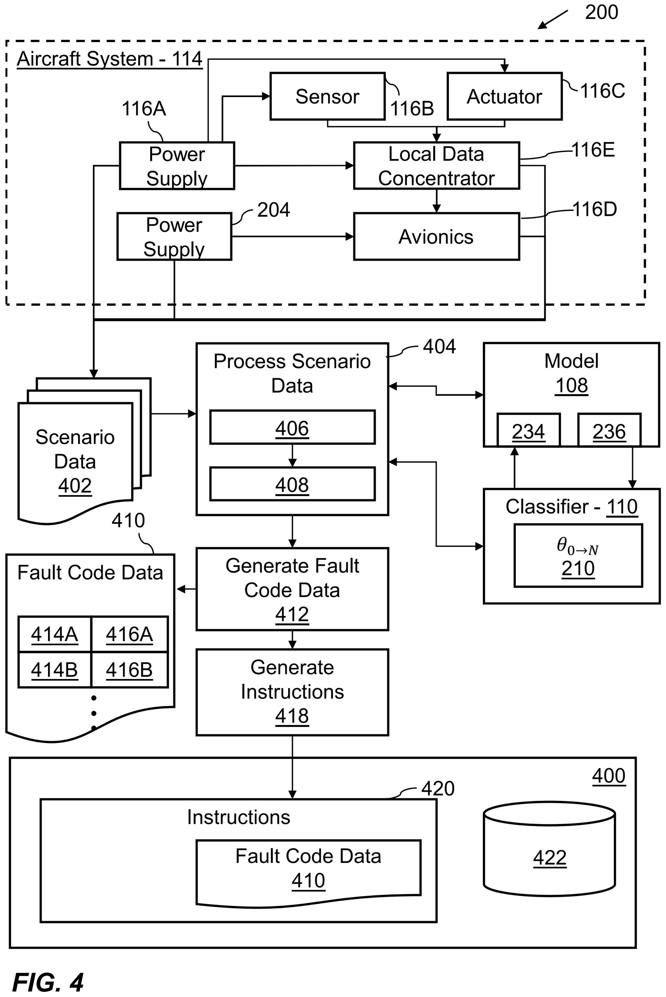

The aircraft maintenance system controller 100 may be used to configure a further aircraft maintenance system controller 400, for example a deterministic BITE system to be implemented on-board an aircraft. Figure 4 shows an example in which the aircraft maintenance system controller 100 is used to generate instructions for such a further aircraft maintenance system controller 400.

According to this example, the aircraft maintenance system controller 100 obtains scenario data 402. The scenario data 402 represents operational characteristics of the plurality of aircraft components in the aircraft system 114 in a plurality of operating scenarios. A given scenario may be presented in the scenario data 402 by, for example, environmental conditions, control states of components in the aircraft system 114 and/or altered operational characteristics or faults of particular components. In the present example, the scenario data 402 is generated using the aircraft system 114 by altering the operating states of the components to replicate specific operating scenarios. In other examples, the scenario data 402 may be generated programmatically by simulating specific operating scenarios for the aircraft system 114.

For each scenario, the aircraft maintenance system controller 100 processes 404 a respective portion of the scenario data 402 with the model 108 using the machine learning classifier 110. The aircraft maintenance system controller 100 identifies 406 a respective plurality of altered operational characteristics for the scenario, and determines 408 a respective cause of the plurality of altered operational characteristics.

Fault code data 410 is generated 412 for each of the plurality of scenarios. The fault code data 410 for a given scenario comprises a respective fault code 414A associated with a respective plurality of altered operational characteristics 416A. In the example shown, the fault code data 410 comprises a first fault code 414A associated with a first plurality of altered operational characteristics 416A, and a second fault code 414B associated with a second plurality of altered operational characteristics 416B. These fault codes 414A and 414B enable combinations of altered operational characteristics to be readily mapped to maintenance procedures to be performed by service crew.

The aircraft maintenance system controller 100 generates 418 instructions 420 for the further aircraft maintenance system controller 400, based on the fault code data 410, that enable the further aircraft maintenance system controller 400 to monitor the condition of the aircraft system 114 in operation and generate fault codes.

The instructions 420 cause the further aircraft maintenance system controller 400 to process operational data representing operational characteristics of the components in the aircraft system 114, and identify a plurality of altered operational characteristics of components in the aircraft system 114. A maintenance message, comprising a fault code 414A or 414B from the plurality of fault codes, can then be generated, for example, by matching the identified plurality of altered operational characteristics with the pluralities of altered operational characteristics associated with each of the fault codes in the fault code data 410.

In some examples, the further aircraft maintenance system controller 400 comprises a database 422 that stores associations between the plurality of fault codes 414A and 414B and corresponding maintenance procedures. A maintenance message generated by the further aircraft maintenance system controller 400 may comprise an indication of a maintenance procedure associated with the fault code 414A or 414B obtained by querying the database 422. This database 422 may be generated based on fault code data 412 generated by the aircraft maintenance system controller 100.

Using the aircraft maintenance system controller 100 in this way, reduces the development time for the further aircraft maintenance system controller 400. Additionally, this enables the further aircraft maintenance system controller 400 to identify more fault codes, relating to specific combinations of altered operational characteristics, than may be feasible through manual programming by developers. Efficient re-configuration and re-development of the further aircraft maintenance system controller 400 is also facilitated. This reduces the time needed to update the further aircraft maintenance system controller 400 in response to changes in the aircraft system 114, for example, due to component upgrades.

In other examples, the aircraft maintenance system controller 100 may be deployed and used on an aircraft. Where the aircraft maintenance system controller 100 is to be deployed in an aircraft, the interface 106 may communicate directly with the components 118 and/or may communicate with one or more data concentrators over the avionics network in the aircraft. The interface 106 may additionally include one or more network interfaces configured to communicate with external systems over wired and/or wireless networks. For example, the interface 106 may be capable of transmitting data to a maintenance scheduling system.

Where the aircraft maintenance system controller 100 is deployed on an aircraft, the second data 212 may comprises a maintenance message 214 indicative of a maintenance procedure configured to address the determined cause. The second data 212 may be transmitted to a scheduling system, using the interface 106, to schedule the aircraft system 114 for the maintenance procedure.

In other examples, a fault code included in the second data 212 may be used to query the database 422 storing associations between fault codes and maintenance procedures. When an entry in the database 422 comprises the fault code, maintenance procedures configured to address the determined cause can be identified and used to generate the maintenance message 214. The maintenance message 214 may then be transmitted to a scheduling system, using the interface 106.

Aircraft systems 114 are highly reliable and redundant systems that include various redundant components to be used in the event of certain components exhibiting altered operational characteristics. In an example, the second data 212 comprises control outputs 240 for modifying the control of the aircraft system 114 in response to the determined cause of the plurality of altered operational characteristics. For example, where the cause of altered operational characteristics for a plurality of components 116B to 116E is determined to be a fault in the power supply 116A, the control outputs 240 may cause the aircraft system 114 to use a backup power supply, not shown. The second data 212 may be provided to one or more aircraft control systems, using the interface 106, that are configured to control the aircraft system 114.

Where the aircraft maintenance system controller 100 is to be deployed on an aircraft, the process for obtaining third data 216 may also be modified. For example, where the second data 212 comprises control outputs 240 for modifying the control of the aircraft system 114, the third data 216 may be generated by the aircraft maintenance system controller 100. In this case, the aircraft maintenance system controller 100 obtains further first data 202 after the control of the aircraft system 114 is modified according to the control outputs 240. The aircraft maintenance system generates the third data 216 by processing the further first data 202 to determine whether the components which previously exhibited altered operational characteristics subsequently exhibit normal, or expected, operational characteristics. Where the components exhibit normal, or expected, operational characteristics the third data 216 may indicate that the determined cause is validated.

Alternatively, where the second data 212 does not comprise control outputs 240, the aircraft maintenance system controller 100 may generate the third data 216 by determining whether corrective action has been taken to address the determined cause of the plurality of altered operational characteristics. Where the cause is determined to be a given component 116A in the aircraft system 114, corrective action may comprise replacing or servicing the component 116A. The aircraft maintenance system controller 100 may subsequently obtain further first data 202 after the replacement or servicing of the component 116A. The further first data 202 may be processed by the aircraft maintenance system controller 100 to determine what corrective action has been taken and whether the components previously exhibiting altered operational characteristics subsequently exhibit normal, or expected, operational characteristics.

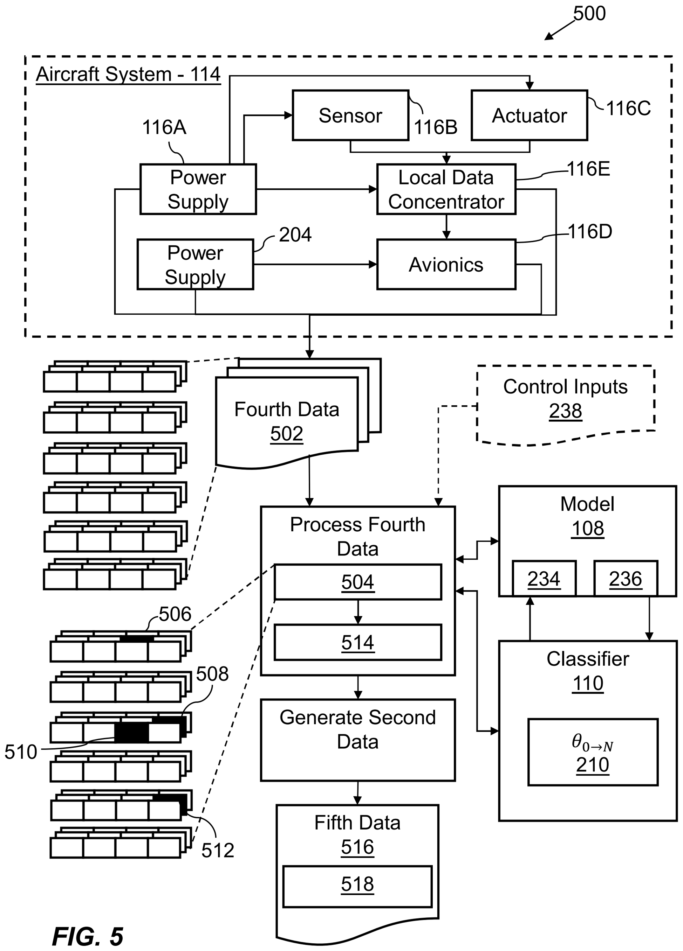

The aircraft maintenance system controller 100 may be configured to perform predictive maintenance process 500 for the aircraft system 114. Figure 5 shows an example of a predictive maintenance process 500 schematically. The process 500 comprises obtaining fourth data 502 representing operational characteristics of components 116A to 116E in the aircraft system 114 during a further period of operation of the aircraft system 114. The fourth data 502 is processed with the model 108, using the machine learning classifier 110, to predict 504 one or more altered operational characteristics of components 506 to 512 in the aircraft system 114 and predict 514 a cause of the one or more predicted altered operational characteristics 506 to 512.

By training the machine learning classifier 110 to understand correlations and dependencies between the operational characteristics of components 116A to 116E in the aircraft system 114, the aircraft maintenance system controller 100 is able to identify when components 116A to 116E are likely to exhibit altered operational characteristics in the future. For example, the sensor 116B may comprise a plurality of electrical circuits which are used for different functions in the sensor 116B. Where an electrical circuit in the sensor 116B, which is not currently being used, is exhibiting an altered operational characteristic, connected components such as the actuator116C, the avionics equipment 116D, and the local data concentrator116E may not exhibit altered operational characteristics. However, the aircraft maintenance system controller 100 may determine that the sensor 116B and/or connected components 116C and 116E may exhibit additional altered operational characteristics in the future, for example, when the sensor 116B tries to use the electrical circuit currently exhibiting an altered operational characteristic.

In this example, the aircraft maintenance system controller 100 generates fifth data 516 comprising an indication 518 of the predicted cause, enabling preventative maintenance to be performed thereby reducing the future downtime for the aircraft. Predictive maintenance of the aircraft system 114 may prevent faults from developing and causing further faults, leading to reduced service time, maintenance costs, and extending the service life of components 118 in the aircraft system 114.

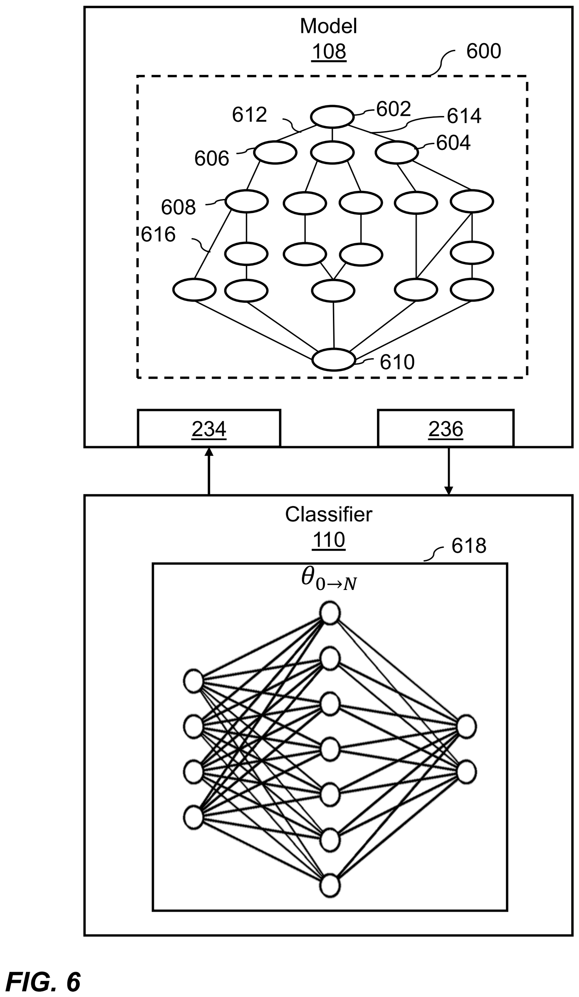

In an example, shown schematically in Figure 6, the model 108 comprises a graph model 600 comprising a set of nodes 602 to 610 connected by a corresponding set of edges 612 to 616. Only a subset of the nodes and edges are labelled in Figure 6 for clarity. Each node 602 to 610 in the graph model 600 represents a function of a component in the aircraft system 114. Where the model 108 comprises a graph model 600, the machine learning classifier 110 may comprise graph-based machine learning classifier 618 configured to evaluate the graph model 600.

Each node 602 to 610 in the graph model 600 is associated with a corresponding set of operational characteristics for a respective component. In this case, a node 602 may comprise a plurality of parameters corresponding to the set of operational characteristics. The graph-based machine learning classifier 618 may evaluate the graph model 600 by applying the set of operational characteristics to the corresponding parameters of the nodes 602 to 610.

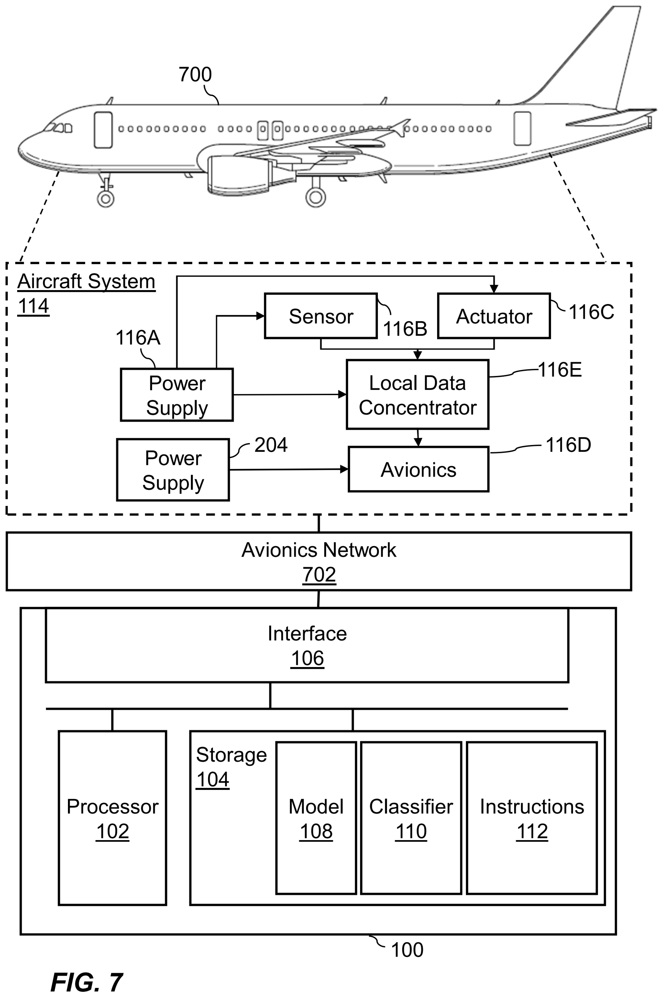

Figure 7 shows an aircraft 700 in which the aircraft maintenance system controller 100 is deployed. The aircraft 700 comprises an avionics network 702 used to connect various avionics systems and subsystems in the aircraft 700. While not shown, it is to be appreciated that the avionics network 702 may comprise a plurality of elements including data buses, end systems, switches and routers, protocols, and redundancy features. The data buses include the physical and protocol-based pathways through which data is transmitted between various components. The end systems generate or consume data within the avionics network. The switches and routers use standards such as Avionics Full-Duplex Switched Ethernet (AFDX) to manage traffic and ensure data is directed correctly. The protocols govern how data is formatted, transmitted, and received. The redundancy features ensure system reliability by duplicating critical communication pathways.

The aircraft 700 comprises one or more aircraft system 114, comprising a plurality of components 116A to 116E, and the aircraft maintenance system controller 100 described above with respect to Figures 1 to 6. While not shown, it is to be appreciated that the aircraft 700 may additionally comprise one or more monitoring devices, not shown, configured to monitor the operational characteristics of the components 116A to 116E and provide the first data 202 to the aircraft maintenance system controller 100. The aircraft maintenance system controller 100 is configured to obtain the first data 202 from the plurality of components 116A to 116E via the avionics network 702. In the examples described above, the aircraft maintenance system controller 100 is described as being applied to a single aircraft system. An aircraft system 114 in this context may include systems such as braking control systems, braking systems, steering systems, extension and retraction of landing gear systems, landing gear monitoring systems, climate control systems, flight control systems, fuel monitoring systems, or sub-systems of any one or more of these systems.

The aircraft maintenance system controller 100 may additionally, or alternatively, be configured to operate on combinations of one or more of these example of aircraft systems. For example, the first data 202 may be obtained from components in a braking control system and a flight control system. In this way, the aircraft maintenance system controller 100 may be configured to determine causes of altered operational characteristics that arise from dependencies between different aircraft systems.

In an example, the aircraft 700 comprises a plurality of aircraft maintenance systems 100 each configured to monitor a respective aircraft system 114. The aircraft 700 may additionally comprise a centralized aircraft maintenance system configured to obtain first data 202 from a plurality of aircraft maintenance system controllers 100.

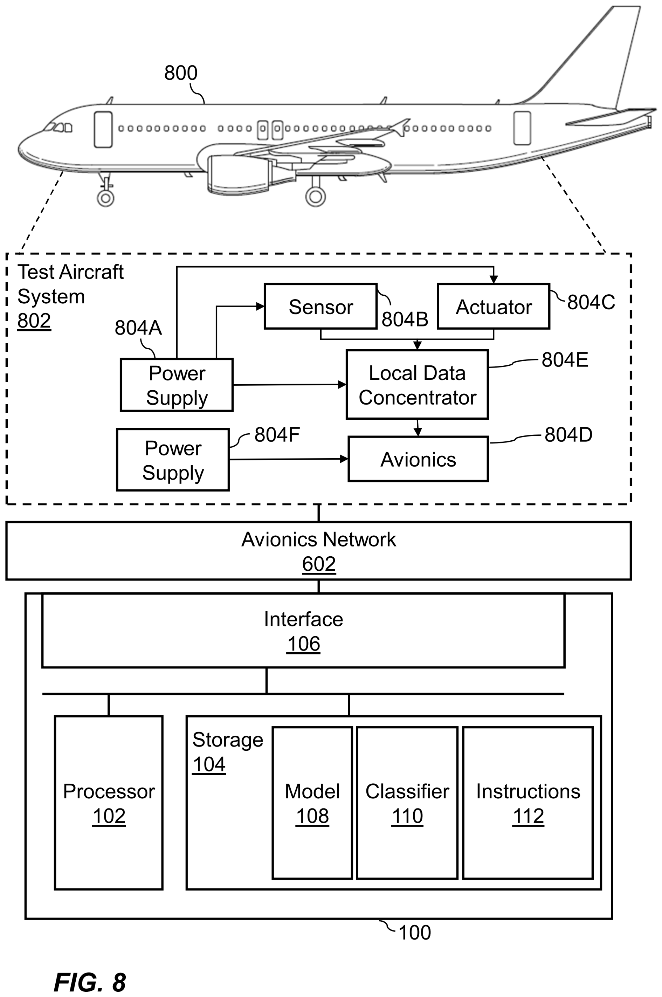

The aircraft maintenance system controller 100 may be deployed as part of a test system, shown schematically in Figure 8. The test system 800 comprising the aircraft maintenance system controller 100, and at least part of a test aircraft system 802 communicatively coupled to the aircraft maintenance system controller 100 and comprising a plurality of components 804A to 804F configured to generate the first data 202. In this case, the aircraft maintenance system controller 100 obtains the first data 202 from the at least part of the test aircraft system 802. The at least part of the test aircraft system 802 may be built during development of an aircraft to test and evaluate the design of the aircraft. The aircraft maintenance system controller 100 may be deployed as part of the test system 800 to train the machine learning classifier 110 based on the actual first data 202 that will be generated by the test aircraft system 802. The aircraft maintenance system controller 100 may then be used to configure a further aircraft maintenance system controller 400 to be deployed in an operational aircraft, or may be deployed in the aircraft itself.

Where the aircraft maintenance system controller 100 is deployed in the test system 800, the third data 216 may be generated based on a modification of a component in the test aircraft system 802.

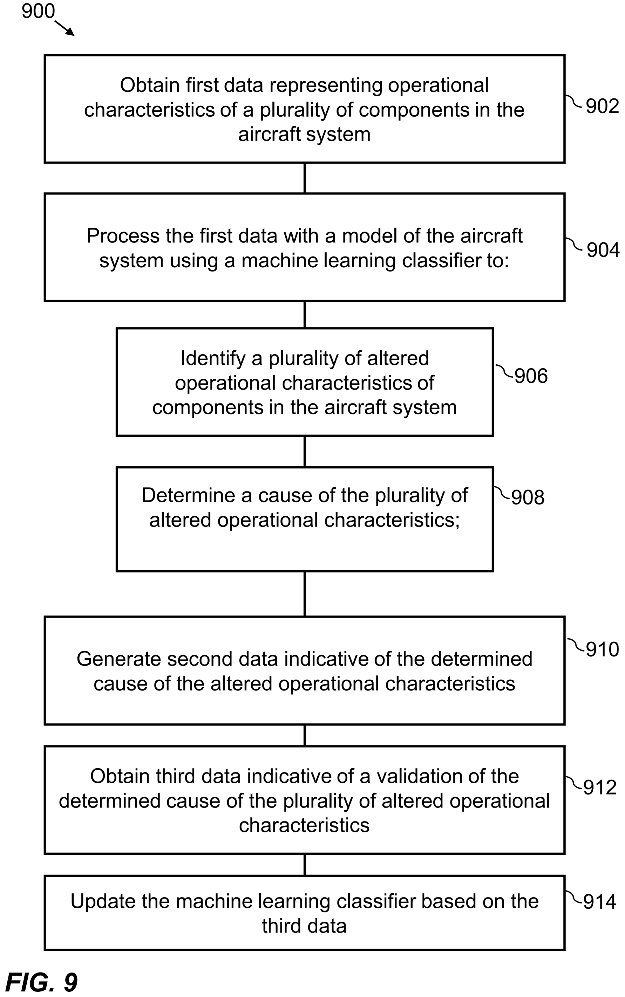

A method 900 for the aircraft maintenance system controller 100 is shown schematically in Figure 9. The method 900 comprises operating the aircraft maintenance system controller 100 to obtain 902 first data 202 using the interface 106, processing 904 the first data 202 with the model 108 using the machine learning classifier 110 to identify 906 a plurality of altered operational characteristics of components in the aircraft system 114 and determine 908 a cause of the plurality of altered operational characteristics.

Second data 212 indicative of the determined cause of the altered operational characteristics is generated 910. The third data 216, indicative of a validation of the determined cause of the plurality of altered operational characteristics is obtained 912. The machine learning classifier 110 is updated 914 based on the third data 216. It is to be appreciated that the examples and variations described above with respect to Figures 1 to 8 may also apply to the method 900.

Where the second data 212 comprises maintenance message 214indicative of a maintenance procedure, the method 900 may also performing the identified maintenance procedure. The maintenance procedure may comprise validating the determined cause of the plurality of altered operational characteristics and generating the third data indicative of the validation.

Alternatively, the method 900 comprises subsequently obtaining further data representing the operational characteristics of the plurality of components and generating the third data 216, based on the further data, by processing it with the model 108 using the machine learning classifier 110.

In an example in which the second data 212 comprises control outputs 240, the method 900 comprises controlling the aircraft system 114 using the control outputs 240. Further data representing the operational characteristics of the plurality of components after controlling the aircraft system 114 using the control outputs 240 is subsequently obtained. The third data 216 is generated, based on this further data, by processing the it with the model 108 using the machine learning classifier 110.

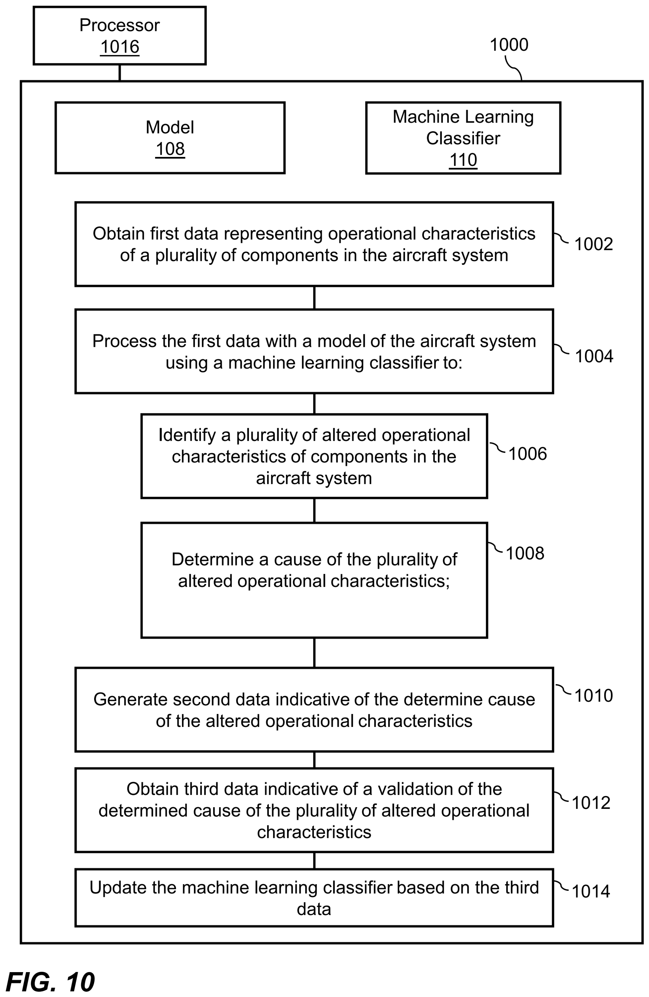

Figure 10 shows a non-transitory computer readable storage medium 1000 schematically. The computer-readable storage medium comprises the model 108, the machine learning classifier 110, and computer-executable instructions 1002 to 1014. The computer-executable instructions 1002 to 1014, when executed by a processor 1016, cause the processor 1016 to perform the method 900 described above with respect to Figure 9.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

It is noted that the term "or" as used herein is to be interpreted to mean "and/or", unless expressly stated otherwise.

### Numbered Clauses

Various features of the present disclosure are set according to the following numbered clauses.
1. An aircraft maintenance system controller configured to:
   obtain first data representing operational characteristics of a plurality of components in an aircraft system;
   process the first data with a model of the aircraft system using a machine learning classifier to:
      identify a plurality of altered operational characteristics of components in the aircraft system; and
      determine a cause of the plurality of altered operational characteristics;
   generate second data indicative of the determined cause of the altered operational characteristics;
   obtain third data indicative of a validation of the determined cause of the plurality of altered operational characteristics; and
   update the machine learning classifier based on the third data.
2. The aircraft maintenance system controller according to clause 1, configured to generate fault code data comprising a plurality of fault codes, each fault code being associated with at least one of a respective plurality of altered operational characteristics of components in the aircraft system by:
   obtaining scenario data representing operational characteristics of the plurality of aircraft components in the aircraft system during a plurality of operational scenarios;
   processing the scenario data with the model of the aircraft system using the machine learning classifier to, for each of the plurality of scenarios:
      identify a respective plurality of altered operational characteristics of components in the aircraft system; and
      determine a respective cause of the plurality of altered operational characteristics; and
   generating fault code data for each scenario of the plurality of scenarios, the fault code data for each scenario comprising a respective fault code and an association with the respective plurality of altered operational characteristics.
3. The aircraft maintenance system controller according to clause 2, configured to generate instructions for a further aircraft maintenance system controller configured to obtain operational data representing operational characteristics of components in the aircraft system, the instructions causing the further aircraft maintenance system controller to:
   process the operational data to identify a plurality of altered operational characteristics of components in the aircraft system; and
   generate a maintenance message comprising a fault code from the plurality of fault codes, the fault code being associated with the plurality of altered operational characteristics identified from the operational data.
4. The aircraft maintenance system controller according any preceding clause, wherein the second data comprises a maintenance message indicative of a maintenance procedure to be performed based on the determined cause of the altered operational characteristics.
5. The aircraft maintenance system controller according to any preceding clause, wherein the model comprises a graph model comprising a set of nodes connected by a corresponding set of edges, and wherein each node in the graph model represents a function of a component in the aircraft system.
6. The aircraft maintenance system controller according to clause 5, wherein the first data comprises a plurality of portions, each portion comprising a set of operational characteristics for a respective component in the aircraft system, and wherein each node of the graph model is associated with a corresponding set of operational characteristics for a respective component.
7. The aircraft maintenance system controller according to clause 6, wherein the set of operational characteristics for a given component are derived from sensed data.
8. The aircraft maintenance system controller according to clause 7, wherein the sensed data from which a said operational characteristic is derived comprises any one or more of:
   voltage;
   frequency;
   electrical current;
   electrical resistance;
   pressure;
   light intensity;
   humidity; and
   temperature.
9. The aircraft maintenance system controller according to any one of clauses 6 to 8, wherein the operational characteristics of a said component comprise any one or more of:
   an indication of a condition of an electrical circuit;
   an indication of a condition of a valve;
   an indication of a power status; and
   an indication of an operating mode.
10. The aircraft maintenance system controller according to any one of clauses 6 to 8, wherein each portion of the first data comprises time series data representing the set of operational characteristics during a period of operation of the aircraft system.
11. The aircraft maintenance system controller according to clause 10, wherein the identified plurality of altered operational characteristics comprise:
   a first altered operational characteristic during a first period of operation of the aircraft system and associated with a first component; and
   a second altered operational characteristic during a second period of operation of the aircraft system and associated with a second, different, component.
12. The aircraft maintenance system controller according to clause 11, wherein the determined cause of the first altered operational characteristic and the second altered operational characteristic is one of the first component or the second component.
13. The aircraft maintenance system controller according to any one of clauses 1 to 9, wherein the identified plurality of altered operational characteristics comprise a first altered operational characteristic associated with a first component and a second altered operational characteristic associated with a second, different, component and wherein the determined cause of the first altered operational characteristic and the second altered operational characteristic is one of the first component or the second component.
14. The aircraft maintenance system controller according to clause 4, wherein the maintenance message comprises an indication of a maintenance procedure configured to address the determined cause, and wherein the computer-executable instructions, when executed by the processor, cause the aircraft maintenance system controller to transmit the second data to a scheduling system to schedule the aircraft system for the maintenance procedure.
15. The aircraft maintenance system controller according to any one of clauses 10 to 12, wherein the computer-executable instructions, when executed by the processor, cause the aircraft maintenance system controller to:
   obtain fourth data representing operational characteristics of components in the aircraft system during a further period of operation of the aircraft system;
   process the fourth data with the model using the classifier to:
      predict one or more altered operational characteristics of components in the aircraft system; and
      predict a cause of the one or more predicted altered operational characteristics; and
   generate fifth data comprising an indication of the predicted cause.
16. The aircraft maintenance system controller according to any preceding clause, wherein the first data comprises control inputs representing instructions for controlling the plurality of components.
17. The aircraft maintenance system controller according to any preceding clause, wherein the second data comprises control outputs for modifying control of the aircraft system in response to the determined cause of the plurality of altered operational characteristics.
18. The aircraft maintenance system controller according to clause 17, wherein the computer-executable instructions, when executed by the processor, cause the aircraft maintenance system controller to:
   transmit the second data to an aircraft control system configured to control the aircraft system;
   obtain sixth data representing operational characteristics of components in the aircraft system after control of the aircraft system has been modified according to the control outputs; and
   process the sixth data with the model using the classifier to generate the third data.
19. An aircraft comprising:
   an avionics network;
   an aircraft system comprising a plurality of components; and
   the aircraft maintenance system controller according to any preceding clause,
   wherein the aircraft maintenance system controller is configured to obtain the first data from the plurality of components via the avionics network.
20. A test system comprising:
   the aircraft maintenance system controller according to any of clauses 1 to 18; and
   at least part of a test aircraft system communicatively coupled to the aircraft maintenance system controller and comprising a plurality of components configured generate the first data,
   wherein the aircraft maintenance system controller is configured to obtain the first data from the at least part of a test aircraft system.
21. A method for an aircraft maintenance system controller, the method comprising:
   obtaining first data representing operational characteristics of a plurality of components in the aircraft system;
   processing the first data with a model of the aircraft system using a machine learning classifier to:
      identify a plurality of altered operational characteristics of components in the aircraft system; and
      determine a cause of the plurality of altered operational characteristics;
   generating second data indicative of the determine cause of the altered operational characteristics;
   obtaining third data indicative of a validation of the determined cause of the plurality of altered operational characteristics; and
   updating the machine learning classifier based on the third data.
22. The method according to clause 21, wherein the second data comprises a maintenance message comprising an indication of a maintenance procedure configured to address the determined cause of the plurality of altered operational characteristics, and the method comprises:
   performing the maintenance procedure;
   subsequently obtaining fourth data representing operational characteristics of the plurality of components in the aircraft system; and
   generating the third data, based on the fourth data, by processing the fourth data with the model using the machine learning classifier.
23. The method according to clause 21 or clause 22, wherein the method comprises generating fault code data comprising a plurality of fault codes, each fault code being associated with at least one of a respective plurality of altered operational characteristics of components in the aircraft system by:
   obtaining scenario data representing operational characteristics of the plurality of aircraft components in the aircraft system during a plurality of operational scenarios;
   processing the scenario data with the model of the aircraft system using the machine learning classifier to, for each of the plurality of scenarios:
      identify a respective plurality of altered operational characteristics of components in the aircraft system; and
      determine a respective cause of the plurality of altered operational characteristics; and
   generating fault code data for each scenario of the plurality of scenarios, the fault code data for each scenario comprising a respective fault code and an association with the respective plurality of altered operational characteristics.
24. A non-transitory computer-readable storage medium comprising computer-executable instructions which, when executed by a processor, cause the processor to:
   obtain first data representing operational characteristics of a plurality of components in an aircraft system;
   process the first data with a model of the aircraft system using a machine learning classifier to:
      identify a plurality of altered operational characteristics of components in the aircraft system; and
      determine a cause of the plurality of altered operational characteristics;
   generate second data indicative of the determined cause of the altered operational characteristics;
   obtain third data indicative of a validation of the determined cause of the plurality of altered operational characteristics; and
   update the machine learning classifier based on the third data.

## Claims

1. An aircraft maintenance system controller configured to:
obtain first data representing operational characteristics of a plurality of components in an aircraft system;
process the first data with a model of the aircraft system using a machine learning classifier to:
identify a plurality of altered operational characteristics of components in the aircraft system; and
determine a cause of the plurality of altered operational characteristics;
generate second data indicative of the determined cause of the altered operational characteristics;
obtain third data indicative of a validation of the determined cause of the plurality of altered operational characteristics; and
update the machine learning classifier based on the third data.

2. The aircraft maintenance system controller according to claim 1, configured to generate fault code data comprising a plurality of fault codes, each fault code being associated with at least one of a respective plurality of altered operational characteristics of components in the aircraft system by:
obtaining scenario data representing operational characteristics of the plurality of aircraft components in the aircraft system during a plurality of operational scenarios;
processing the scenario data with the model of the aircraft system using the machine learning classifier to, for each of the plurality of scenarios:
identify a respective plurality of altered operational characteristics of components in the aircraft system; and
determine a respective cause of the plurality of altered operational characteristics; and
generating fault code data for each scenario of the plurality of scenarios, the fault code data for each scenario comprising a respective fault code and an association with the respective plurality of altered operational characteristics.

3. The aircraft maintenance system controller according to claim 2, configured to generate instructions for a further aircraft maintenance system controller configured to obtain operational data representing operational characteristics of components in the aircraft system, the instructions causing the further aircraft maintenance system controller to:
process the operational data to identify a plurality of altered operational characteristics of components in the aircraft system; and
generate a maintenance message comprising a fault code from the plurality of fault codes, the fault code being associated with the plurality of altered operational characteristics identified from the operational data.

4. The aircraft maintenance system controller according any preceding claim, wherein the second data comprises a maintenance message indicative of a maintenance procedure to be performed based on the determined cause of the altered operational characteristics,
optionally, wherein the maintenance message comprises an indication of a maintenance procedure configured to address the determined cause, and wherein the computer-executable instructions, when executed by the processor, cause the aircraft maintenance system controller to transmit the second data to a scheduling system to schedule the aircraft system for the maintenance procedure.

5. The aircraft maintenance system controller according to any preceding claim, wherein the model comprises a graph model comprising a set of nodes connected by a corresponding set of edges, and wherein each node in the graph model represents a function of a component in the aircraft system,
optionally, wherein the first data comprises a plurality of portions, each portion comprising a set of operational characteristics for a respective component in the aircraft system, and wherein each node of the graph model is associated with a corresponding set of operational characteristics for a respective component,
optionally, wherein the set of operational characteristics for a given component are derived from sensed data,
optionally, wherein the sensed data from which a said operational characteristic is derived comprises any one or more of: voltage; frequency; electrical current;
electrical resistance; pressure; light intensity; humidity; and temperature,
optionally, wherein the operational characteristics of a said component comprise any one or more of: an indication of a condition of an electrical circuit; an indication of a condition of a valve; an indication of a power status; and an indication of an operating mode.

6. The aircraft maintenance system controller according to claim 5, wherein each portion of the first data comprises time series data representing the set of operational characteristics during a period of operation of the aircraft system
optionally, wherein the identified plurality of altered operational characteristics comprise:
a first altered operational characteristic during a first period of operation of the aircraft system and associated with a first component; and
a second altered operational characteristic during a second period of operation of the aircraft system and associated with a second, different, component
optionally, wherein the determined cause of the first altered operational characteristic and the second altered operational characteristic is one of the first component or the second component.

7. The aircraft maintenance system controller according to any one of claims 1 to 5, wherein the identified plurality of altered operational characteristics comprise a first altered operational characteristic associated with a first component and a second altered operational characteristic associated with a second, different, component and wherein the determined cause of the first altered operational characteristic and the second altered operational characteristic is one of the first component or the second component.

8. The aircraft maintenance system controller according to claim 6, wherein the computer-executable instructions, when executed by the processor, cause the aircraft maintenance system controller to:
obtain fourth data representing operational characteristics of components in the aircraft system during a further period of operation of the aircraft system;
process the fourth data with the model using the classifier to:
predict one or more altered operational characteristics of components in the aircraft system; and
predict a cause of the one or more predicted altered operational characteristics; and
generate fifth data comprising an indication of the predicted cause.

9. The aircraft maintenance system controller according to any preceding claim, wherein the first data comprises control inputs representing instructions for controlling the plurality of components.

10. The aircraft maintenance system controller according to any preceding claim, wherein the second data comprises control outputs for modifying control of the aircraft system in response to the determined cause of the plurality of altered operational characteristics
optionally, wherein the computer-executable instructions, when executed by the processor, cause the aircraft maintenance system controller to:
transmit the second data to an aircraft control system configured to control the aircraft system;
obtain sixth data representing operational characteristics of components in the aircraft system after control of the aircraft system has been modified according to the control outputs; and
process the sixth data with the model using the classifier to generate the third data.

11. An aircraft comprising:
an avionics network;
an aircraft system comprising a plurality of components; and
the aircraft maintenance system controller according to any preceding claim,
wherein the aircraft maintenance system controller is configured to obtain the first data from the plurality of components via the avionics network.

12. A test system comprising:
the aircraft maintenance system controller according to any of claims 1 to 10; and
at least part of a test aircraft system communicatively coupled to the aircraft maintenance system controller and comprising a plurality of components configured generate the first data,
wherein the aircraft maintenance system controller is configured to obtain the first data from the at least part of a test aircraft system.

13. A method for an aircraft maintenance system controller, the method comprising:
obtaining first data representing operational characteristics of a plurality of components in the aircraft system;
processing the first data with a model of the aircraft system using a machine learning classifier to:
identify a plurality of altered operational characteristics of components in the aircraft system; and
determine a cause of the plurality of altered operational characteristics;
generating second data indicative of the determine cause of the altered operational characteristics;
obtaining third data indicative of a validation of the determined cause of the plurality of altered operational characteristics; and
updating the machine learning classifier based on the third data.

14. The method according to claim 13, wherein the second data comprises a maintenance message comprising an indication of a maintenance procedure configured to address the determined cause of the plurality of altered operational characteristics, and the method comprises:
performing the maintenance procedure;
subsequently obtaining fourth data representing operational characteristics of the plurality of components in the aircraft system; and
generating the third data, based on the fourth data, by processing the fourth data with the model using the machine learning classifier.

15. A non-transitory computer-readable storage medium comprising computer-executable instructions which, when executed by a processor, cause the processor to:
obtain first data representing operational characteristics of a plurality of components in an aircraft system;
process the first data with a model of the aircraft system using a machine learning classifier to:
identify a plurality of altered operational characteristics of components in the aircraft system; and
determine a cause of the plurality of altered operational characteristics;
generate second data indicative of the determined cause of the altered operational characteristics;
obtain third data indicative of a validation of the determined cause of the plurality of altered operational characteristics; and
update the machine learning classifier based on the third data.
